## Europäisches Patentamt
## European Patent Office
## Office européen des brevets

(11) Veröffentlichungsnummer: **0 167 084**
**B1**

(12) # EUROPÄISCHE PATENTSCHRIFT

(45) Veröffentlichungstag der Patentschrift:
27.12.89

(51) Int. Cl.⁴: **C 09 K 3/10, C 08 L 23/28**

(21) Anmeldenummer: **85107816.2**

(22) Anmeldetag: **24.06.85**

(54) **Dichtungsmaterial auf Kunststoffbasis.**

(30) Priorität: **28.06.84 DE 3423907**

(43) Veröffentlichungstag der Anmeldung:
**08.01.86 Patentblatt 86/2**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**DE-A-2 831 780**

(73) Patentinhaber: **Gebrüder Kömmerling Kunststoffwerke GmbH, Zweibrücker Strasse 200, D-6780 Pirmasens (DE)**

(72) Erfinder: **Knoll, Brigitte, Franckstrasse 6, D-6660 Zweibrücken (DE)**

(74) Vertreter: **Dipl.- Ing. Schwabe, Dr. Dr. Sandmair, Dr. Marx, Stuntzstrasse 16 Postfach 86 02 45, D-8000 München 86 (DE)**

LIBER, STOCKHOLM 1989

**Beschreibung**

Die Erfindung betrifft ein Dichtungsmaterial auf Kunststoffbasis und dessen Verwendung zum Abdichten von Kunststoffkörpern, insbesondere Tür- oder Fensterflügeln, speziell zum kittlosen Verglasen von Türen oder Fenstern.

Für Kunststoffenster oder Kunststofftüren war es früher üblich, kittlose Verglasungen mit Hilfe von Verglasungsschnüren auf der Basis von synthetischem Kautschuk (ATPK, Neopren) durchzuführen. Hierbei wurden die Dichtungsschnüre auf Gehrung geschnitten und in Aussparungen der Glasleiste bzw. des Fenster- oder Türflügels eingebracht. Diese Arbeitsweise ist jedoch sehr umständlich und zeitaufwendig.

Eine Weiterentwicklung bestand darin, die Füllung, in der Regel eine Glasscheibe, in aus Kunststoffhohlprofilstäben zusammengesetzten Rahmen von Türen oder Fenstern mittels zweier einander gegenüberliegender Dichtungen festzuhalten. Von diesen beiden Dichtungen ist die eine in einer Nut in einer Rippe gehalten, während die andere an einer Halteleiste sitzt, die ihrerseits in eine Nut im Hohlprofilstab einrastet oder eingeschoben ist. In der Regel sind Hohlprofilstab und Halteleiste aus schlagzähem Hart-Polyvinylchlorid (Hart-PVC) gebildet.

Beide Dichtungen sind als Lippendichtungen ausgebildet mit mehreren parallel zueinander verlaufenden Lippen, die beim Einsetzen der Füllung so verformt werden, daß sie gegen deren Oberfläche unter Spannung anliegen. Das Material dieser Lippen wird hierbei in erster Linie auf Biegung belastet.

Solche Dichtungslippen haben einen sehr großen Verformungsweg und sind daher auch geeignet, große Maßabweichungen in der Dicke der Fassung und in den entsprechenden Abmessungen des Rahmens und der Füllung aufzunehmen.

Die in der Rippe sitzende Dichtung ist in der Regel aus natürlichem oder synthetischem Kautschuk gefertigt, der elastisch bleibt und auch nach längerer Zeit noch die erforderliche Haltekraft auf die Füllung ausübt. Die an der Halteleiste angebrachte Dichtung besteht aus einem thermoplastischen Material, um gemeinsam mit der Halteleiste koextrudiert werden zu können. Eine Koextrusion des Thermoplasts der Rahmenstäbe und der Halteleiste mit dauerelastischen Elastomeren, die hier in Frage kommen, ist dagegen nicht möglich.

Thermoplastische Materialien, vornehmlich weichgemachtes Polyvinylchlorid (PVC), das durch Art und Menge des darin enthaltenen Weichmachers auf die gewünschte Shore-Härte eingestellt werden kann, kann zwar unter Anwendung konventioneller Verfahren mit der Hart-PVC-Glasleiste bzw. dem Hart-PVC-Fensterprofil gemeinsam extrudiert werden, die solchermaßen anextrudierten Weich-PVC-Dichtungslippen haben jedoch den Nachteil, daß sie aufgrund ihrer Neigung zur Weichmacherwanderung und -extraktion nach einiger Zeit verspröden und die Rückstellkräfte abbauen, so daß die bekannte, mit der Halteleiste koextrudierte Dichtung mit ihren Dichtungslippen nach einiger Zeit nicht mehr ausreichend fest an der Füllung, insbesondere Glasscheibe, anliegt. Damit ist nicht nur die abdichtende Wirkung beeinträchtigt, weil eine solche lose anliegende Dichtungslippe von Feuchtigkeit unterkrochen werden kann, vielmehr ist die bekannte Dichtung auch nicht mehr in der Lage, die Füllung, welche oft erhebliche Kräfte aufnehmen muß, in ihrer Lage festzuhalten.

Aufgabe der Erfindung war es daher, ein Dichtungsmaterial zu entwickeln, das sich für die Herstellung von koextrudierten Dichtungslippen eignet, ohne daß dabei die vorstehend geschilderten Nachteile, nämlich ein unerwünschter Abbau der Rückstellkräfte, eine unerwünschte Versprödung und ein unerwünschter Abfall der Haftung an der Halteleiste, auftreten.

Es wurde nun gefunden, daß diese Aufgabe gelöst werden kann durch Verwendung eines weichmacherfreien Dichtungsmaterials auf Kunststoffbasis mit der nachstehend angegebenen Zusammensetzung.

Gegenstand der Erfindung ist ein Dichtungsmaterial auf Kunststoffbasis, das dadurch gekennzeichnet ist, daß es besteht aus: nachchloriertem Polyethylen (CPE) mit einem Chlorgehalt von 30 bis 42 %, vorzugsweise von 36 %,

Acrylnitril/Butadien-Kautschuk (NBR) mit einem Verhältnis von Butadien zu Acrylnitril von 55 : 45 bis 82 : 18, vorzugsweise von 67 : 33, und

Polyvinylchlorid (PVC) mit einem K-Wert von 58 bis 78, vorzugsweise von 70, mit einem Weichmacheraufnahmevermögen von mindestens 30 % (nach DIN 53 417, Teil 1) sowie gegebenenfalls üblichen PVC-Stabilisatoren, Füllstoffen, Pigmenten und Treibmitteln.

Ein solches Dichtungsmaterial weist eine bessere Standfestigkeit und Dauerelastizität auf als die bisher verwendeten, weichmacherhaltigen Dichtungsmaterialien, insbesondere Weich-PVC, und es bietet den Vorteil, daß es mit schlagzähem Hart-PVC, aus dem in der Regel die Tür- und Fensterrahmen sowie die Halteleiste bestehen, auf an sich bekannte Weise koextrudiert werden kann unter Ausbildung einer an die Halteleiste anextrudierten Dichtungslippe.

Gemäß einer bevorzugten Ausgestaltung der Erfindung besteht das Dichtungsmaterial aus

40 bis 60 Gew.-Teilen nachchloriertem Polyethylen (CPE) mit einem Chlorgehalt von 30 bis 42 %, vorzugsweise 36 %, 20 bis 30 Gew.-Teilen Nitrilkautschuk (NBR) mit einem Verhältnis von Butadien : Acrylnitril von 55 : 45 bis 82 : 18, vorzugsweise von 67 : 33,

20 bis 30 Gew.-Teilen Polyvinylchlorid mit einem K-Wert von 58 bis 78, vorzugsweise von 70, mit einem Weichmacheraufnahmevermögen von mindestens 30 % (nach DIN 53 417, Teil 1) sowie

0 bis 0,5 Gew.-Teilen Azodicarbonamid,

0 bis 20 Gew.-Teilen Calciumcarbonat (unbeschichtet),

1,5 bis 2,5 Gew.-Teilen Bariumcadmiumlaurat und/oder Bariumcadmiumstearat und/oder Bariumcadmiummyristat,

0,4 bis 0,6 Gew.-Teilen organischem Phosphit als Kostabilisator für die zuletzt genannte Komponente mit einem Brechungsindex $n_D^{20} = 1,515$ bis 1,525,

1 bis 2 Gew.-Teilen epoxidiertem Sojabohnenöl und

0,5 bis 1,5 Gew.-Teilen Flammruß oder Gasruß für ein schwarzes Dichtungsmaterial oder

4 bis 8 Gew.-Teilen Titandioxid vom Rutil-Typ für ein weißes Dichtungsmaterial.

Ein solches Dichtungsmaterial weist eine noch weiter verbesserte Standfestigkeit und Elastizität nach seiner Verformung zu einer Dichtungslippe auf, die wesentlich rückstellelastischer ist als eine solche aus Weich-PVC.

Das erfindungsgemäß zusammengesetzte Dichtungsmaterial läßt sich ohne weiteres verschweißen, da hierbei keine Weichmacherverdampfung und somit auch keine Versprödung auftreten kann. Es können somit problemlos Halteleisten in beliebiger Länge zusammen und auch in der Gehrung verschweißt werden.

Zur Verbesserung seiner Alterungsbeständigkeit und Rückstelleigenschaften sowie zum Einfärben kann das erfindungsgemäße Dichtungsmaterial übliche Füll- und Zuschlagstoffe enthalten. Durch Verwendung geeigneter Treibmittel kann das erfindungsgemäße Dichtungsmaterial während der Koextrusion aufgeschäumt werden, wobei vorzugsweise in einer nachfolgenden Kalibrierstation eine geschlossene, porenfreie Außenoberfläche erzielt wird (Moosgummieffekt).

Gegenstand der Erfindung ist ferner die Verwendung des vorstehend beschriebenen Dichtungsmaterials in Form einer Spritzmasse oder in Form einer koextrudierten Dichtungslippe zum Abdichten von Kunststoffkörpern, insbesondere Tür- oder Fensterflügeln, speziell zum kittlosen Verglasen von Türen oder Fenstern.

Eine solche Dichtungslippe kann an einer geeigneten Stelle der Halteleiste und getrennt von der Dichtungsauflage mit der Leiste koextrudiert werden, vorzugsweise bilden jedoch Dichtungsauflage und Dichtungslippe gemeinsam eine einzige Dichtung, um die Herstellung zu vereinfachen.

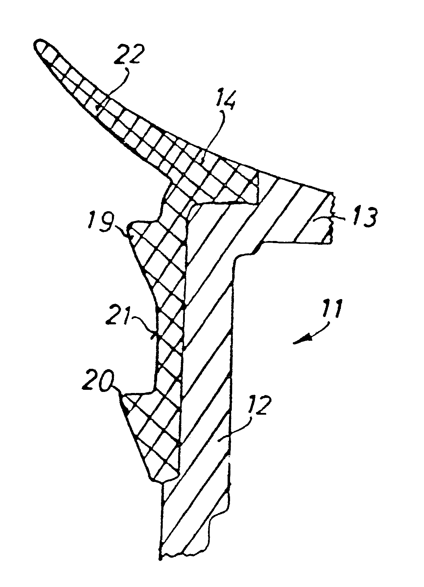

In der beiliegenden Zeichnung ist eine beispielhafte Ausführungsform einer solchen Dichtungslippe mit Dichtungsauflage und Halteleiste schematisch dargestellt.

In der dargestellten beispielhaften Ausführungsform ist eine Dichtungsauflage 14 in einer Abstufung sowohl der Wand 12 als auch der Wand 13 der Halteleiste 11 eingelassen. Die Dichtungsauflage 14 weist einen Abschnitt auf, der durch Koextrusion mit der Wand 12 verbunden ist und dessen der Glasscheibe zugewandte Oberfläche 21 parallel zur Wand 12 verläuft. Von dieser Oberfläche 21 ausgehend ragen zwei Längswulste 19, 20 ab mit jeweils sich einer etwa rechtwinklig zur Oberfläche 21 erstreckenden Flanke, die der Dichtungslippe 22 zugewandt ist, sowie jeweils einer in die entgegengesetzte Richtung weisenden, flach zur Oberfläche 21 abfallenden Flanke. Am Übergang zwischen den Wänden 12 und 13 der Halteleiste 11 ist eine lange, sich von diesem Übergangsbereich aus in Richtung zur Mitte der Glasscheibe hin verjüngende Dichtungslippe 22 angeformt, die in der beiliegenden Zeichnung in ihrer Ruhelage gezeigt ist, in der sie die Verbindungslinie zwischen den freien Kanten der Längswülste 19, 20 weit überragt. Im zusammengebauten Zustand ist diese Dichtungslippe 22 jedoch stark verformt, wobei sie dichtend gegen die Glasscheibe anliegt, deren der Dichtungslippe 22 zugewandte Oberfläche auf den auch dann nur wenig zusammengedrückten Längswulsten 19, 20 aufliegt und somit mit der obengenannten Verbindungslinie etwa zusammenfällt.

Einzelheiten über die Ausgestaltung und Funktionsweise eines solchen Abdichtungssystems sind in der von der Anmelderin am gleichen Tage unter dem internen Zeichen "Anwaltsakte 33 479" eingereichten deutschen Patentanmeldung mit dem Titel "Tür- oder Fensterflügelrahmen" zu finden.

Grundlage des erfindungsgemäßen Dichtungsmaterials auf Kunststoffbasis ist nachchloriertes Polyethylen (CPE) mit einem Chlorgehalt von 30 bis 42 %, vorzugsweise 36 %. Dieses Material hat allein eine Shore-A-Härte von etwa 55 (nach DIN 53 505, 10s).

Zur Erzielung einer befriedigenden Rückstellelastizität wird das CPE erfindungsgemäß mit Nitrilkautschuk (NBR) mit einem Butadien : Acrylnitril-Verhältnis von 55 : 45 bis 82 : 18, vorzugsweise 67 : 33, gemischt. Durch den Zusatz eines Nitrilkautschuks allein wird die Shore-A-Härte jedoch noch nicht ausreichend erhöht. Um zu praktikablen Shore-A-Härten von mehr als 65 zu kommen, wird daher der Mischung noch Polyvinylchlorid (PVC) mit einem K-Wert von 58 bis 78, vorzugsweise 70, mit einem Weichmacheraufnahmevermögen von mindestens 30 % (nach DIN 53 417, Teil 1) zugesetzt. Die so erhaltene Mischung wird dann gegebenenfalls noch mit üblichen PVC-Stabilisatoren versetzt und enthält vorzugsweise noch Füllstoffe, wie Kreide, und entsprechende Pigmente zur gewünschten Farbeinstellung.

Die Shore-A-Härte des erfindungsgemäßen Dichtungsmaterials der vorstehend angegebenen Zusammensetzung beträgt 65 bis 80, vorzugsweise 70 bis 75.

Beispiele für erfindungsgemäß verwendbare PVC-Stabilisatoren sind Barium-Cadmium-Seifen, zinnorganische Verbindungen, Bleiverbindungen, Calcium-Zink-Seifen, bevorzugt werden Barium-Cadmium-Seifen verwendet.

Beispiele für erfindungsgemäß verwendbare Füllstoffe sind Kreide (Calciumcarbonat), Gips, Kieselsäure, Kaolin; vorzugsweise wird Kreide verwendet.

Beispiele für erfindungsgemäß verwendbare Pigmente sind Titandioxid, Ruß, anorganische und organische Pigmente der verschiedensten Art; vorzugsweise werden Titandioxid, insbesondere ein solches vom Rutil-Typ, als weißes Pigment und Ruß, insbesondere Flamm- oder Gasruß, als schwarzes Pigment verwendet.

Als Treibmittel können erfindungsgemäß anorganische Treibmittel, wie Ammoniumbicarbonat und Natriumbicarbonat, sowie organische Treibmittel, wie Azodicarbonamid, Sulfohydrazid und Pentamethylentetramin, verwendet werden. Vorzugsweise werden Natriumbicarbonat und Azodicarbonamid verwendet.

Erfindungsgemäß verwendbare übliche Zuschlagstoffe, die insbesondere Schlagzähkomponenten darstellen, sind Polyacrylate, mit Ethylenvinylacetat modifiziertes Polyvinylchlorid und chloriertes Polyethylen. Vorzugsweise wird chloriertes Polyethylen verwendet.

Zur Herstellung einer Dichtungslippe aus dem erfindungsgemäßen Dichtungsmaterial wird beispielsweise eine Dryblend-Mischung der nachstehend angegebenen Zusammensetzung einem Einschneckenextruder mit einem Schneckendurchmesser von 30 mm und einer Länge von 15 D zugeführt. Die Temperaturen dieses Extruders sind wie folgt eingestellt:

Zone 1: 162°C
Zone 2: 162°C
Zone 3: 168°C
Zone 4: 170°C.

Die Drehzahl beträgt 8 UpM.

Dryblend-Mischung zur Herstellung der Dichtungslippe:

50 Gew.-Teile CPE, Chlorgehalt 36 %
25 Gew.-Teile S-PVC, K-Wert 70
25 Gew.-Teile Nitrilkautschuk NBR (Butadien : Acrylnitril-Verhältnis 67 : 33)
2 Gew.-Teile Bariumcadmiumlaurat
0,5 Gew.-Teile organisches Phosphit
1,5 Gew.-Teile epoxidiertes Sojabohnenöl
5 Gew.-Teile Calciumcarbonat
1,5 Gew.-Teile Flammruß

Dem Hauptextruder wird ein Hart-PVC-Material mit CPE als Schlagzähkomponente zugeführt. Die Temperaturen des Hauptextruders sind wie folgt eingestellt:

Zone 1: 150°C
Zone 2: 170°C
Zone 3: 170°C
Zone 4: 162°C
Zone 5: 160°C
Zone 6: 208°C
Zone 7: 208°C

Die Drehzahl beträgt 12 UpM.

Sowohl das Produkt des Einschneckenextruders als auch das Produkt des Hauptextruders werden einem Koextruder (Doppelschneckenextruder mit einem Schneckendurchmesser von 65 mm) mit einer Drehzahl von 12 UpM zugeführt. Unter den oben angegebenen Extrusionsbedingungen erhielt man eine Halteleiste mit anextrudierter Dichtungslippe, die nach dem Kalibrieren bei einer Abzugsgeschwindigkeit von 2 m/min die aus der Zeichnung ersichtliche Formgebung hatte.

Das Material der Dichtungslippe wies die folgenden mechanischen Eigenschaften auf:

Shore A-Härte: 70 bis 72 (nach DIN 53 505)
Zugfestigkeit: 13 N/mm$^2$ (nach DIN 53 455)
Bruchdehnung: 1000 % (nach DIN 53 455)
Druckverformungsrest 22 h/70°C bei 25 % Verformung: 65 % (nach DIN 53 517)
Abreißfestigkeit der koextrudierten Dichtungslippe vom Hart-PVC-Profil:) 70 N/mm$^2$.

Von besonderem Interesse ist in diesem Zusammenhang der vorstehend angegebene günstige Wert für den Druckverformungsrest, der ein Maß für die Rückstellelastizität der erfindungsgemäßen Dichtungslippe darstellt. Je niedriger dieser Wert ist, um so rückstellelastischer ist das Dichtungsmaterial. Übliches weichgemachtes PVC hat beispielsweise einen entsprechenden Wert von über 80 %, synthetischer Kautschuk, z. B. ATPK (ein Ethylen/Propylen/Terpolymer-Kautschuk mit einem Dien als Terkomponente) hingegen einen entsprechenden Wert von < 50 %.

Der entsprechende Wert des erfindungsgemäßen Dichtungsmaterials liegt in jedem Falle unter 70 %.

Die Fenster- oder Türrahmen, an welche die Abdichtungslippen der obengenannten Zusammensetzung angespritzt oder damit koextrudiert werden, bestehen in der Regel aus Hart-PVC, das in bekannter Weise mit Zuschlagstoffen compoundiert ist. Dieses PVC kann normal eingestellt werden, es kann aber auch vorzugsweise schlagzäh modifiziert sein. Als Schlagzähkomponenten kommen alle bekannten Zuschläge, die hierfür dienlich sind, in Betracht. Vorzugsweise nimmt man für die erfindungsgemäße Anextrusion der Dichtungslippe ein PVC, das als Schlagzähkomponente nachchloriertes Polyethylen (CPE) enthält.

Die Erfindung wurde vorstehend an Hand der Herstellung einer Dichtungslippe aus dem erfindungsgemäßen Dichtungsmaterial für einen Türoder Fensterflügelrahmen beschrieben, sie kann aber auch in anderem Zusammenhang verwendet werden, beispielsweise bei Raumteilern, die wie ein Tür- oder Fensterflügelrahmen aus Kunststoffhohlprofilstäben und einer Füllung aufgebaut sind.

**Patentansprüche**

1. Dichtungsmaterial auf Kunststoffbasis, *dadurch gekennzeichnet*, daß es besteht aus:

- 40 bis 60 Gew.-Teilen nachchloriertem Polyethylen (PCE) mit einem Chlorgehalt von 30 bis 42 %, vorzugsweise 36 %,
  20 bis 30 Gew.-Teilen Acrylnitril/Butadien-Kautschuk NBR in einem Verhältnis von Buta-

dien : Acrylnitril von 55 : 45 bis 82 : 18, vorzugsweise von 67 : 33,
- 20 bis 30 Gew.-Teilen Polyvinylchlorid mit einem K-Wert von 58 bis 78, vorzugsweise von 70, mit einem Weichmacheraufnahmevermögen von mindestens 30 % (nach DIN 53 417, Teil 1), sowie
- gegebenenfalls üblichen PVC-Stabilisatoren, Füllstoffen, Pigmenten und Treibmitteln.

2. Dichtungsmaterial nach Anspruch 1, dadurch gekennzeichnet, daß

- es ein Treibmittel zum Aufschäumen enthält.

3. Dichtungsmaterial nach einem der Ansprüche 1 oder 2, dadurch gekennzeichnet, daß es enthält

- 0 bis 0,5 Gew.-Teile Azodicarbonamid,
- 0 bis 20 Gew.-Teile Calziumcarbonat (unbeschichtet),
- 1,5 bis 2,5 Gew.-Teile Bariumcadmiumlaurat, und/oder Bariumcadmiumstearat und/oder Bariumcadmiummyristat,
- 0,4 bis 0,6 Gew.-Teilen organischem Phosphit mit einem Brechungsindex $n_D^{20}$ = 1,515 bis 1,525,
- 1 bis 2 Gew.-Teilen epoxidiertem Sojabohnenöl und
- 0,5 bis 1,5 Gew.-Teilen Flammruß oder Gasruß für ein schwarzes Dichtungsmaterial oder
- 4 bis 8 Gew.-Teilen Titandioxid vom Rutil-Typ für ein weißes Dichtungsmaterial.

4. Dichtunsmaterial nach einem der Ansprüche 1 bis 3, dadurch gekennzeichnet, daß es

- 50 Gew.-Teile nachchloriertes Polyethylen (PCE) enthält.

5. Verwendung des Dichtungsmaterials nach einem der Ansprüche 1 bis 4 in Form einer Spritzmasse oder in Form einer coextrudierten Dichtungslippe zum Abdichten von Kunststoffkörpern, insbesondere Tür- oder Fensterflügeln, speziell zum kittlosen Verglasen von Türen oder Fenstern.

## Claims

1. A sealing material on a plastics base, characterised in that it consists of:

- 40 to 60 parts by weight of afterchlorinated polyethylene (PCE) with a chlorine content of from 30 to 42 %, preferably 36 %,
- 20 to 30 parts by weight of acrylonitrile/butadiene rubber NBR in a ratio of butadiene : acrylonitrile of from 55 : 45 to 82 : 18, preferably of 67 : 33,
- 20 to 30 parts by weight of polyvinyl chloride with a k-value of 58 to 78, preferably of 70, with a plasticizer sorption capacity of at least 30 % (in accordance with DIN 53 417, part 1), and
- possibly the usual PVC stabilizers, fillers, pigments and blowing agents.

2. A sealing material according to Claim 1, characterised in that

- it contains a blowing agent for the foaming operation.

3. A sealing material according to either one of the Claims 1 or 2, characterised in that it contains

- 0 to 0.5 parts by weight of azodicarbonamide,
- 0 to 20 parts by weight of calcium carbonate (uncoated),
- 1.5 to 2.5 parts by weight of barium-cadmium laurate, and/or barium-cadmium stearate and/or barium-cadmium myristate,
- 0.4 to 0.6 parts by weight- of organic phosphite with a refractive index $n_D^{20}$ = 1.515 to 1.525,
- 1 to 2 parts by weight of epoxidized soya bean oil and
- 0.5 to 1.5 parts by weight of lamp black or gas black for a black sealing material or
- 4 to 8 parts by weight of titanium dioxide of the rutile type for a white sealing material.

4. A sealing material according to any one of Claims 1 to 3, characterised in that

- it contains 50 parts by weight of afterchlorinated polyethylene (PCE).

5. The use of the sealing material according to any one of Claims 1 to 4 in the form of an injection moulding compound or in the form of a coextruded sealing lip for sealing plastics members, particularly wings of doors or windows, especially for the puttyless glazing or doors or windows.

## Revendications

1. Matériau d'étanchéité à base de polymère, qui est caractérisé en ce qu'il est constitué:

de 40 à 60 parties en poids de polyéthylène surchloré (PCE) ayant une teneur en chlore de 30 à 42 % de préférence 36 %,
de 20 à 30 parties en poids de caoutchouc acrylonitrile-butadiène (NBR) avec un rapport butadiène : acrylonitrile de 55 : 45 à 82 : 18, de préférence 67 : 33,
de 20 à 30 parties en poids de chlorure de polyvinyle ayant un indice K de 58 à 78, de préférence de 70, avec une capacité d'absorption de plastifiant d'au moins 30 % (selon DIN 53417, parties), ainsi qu'éventuellement de stabilisants pour PVC, de charges, de pigments et d'agents de gonflement usuels.

2. Matériau d'étanchéité selon la revendication 1, caractérisé en ce qu'il contient un agent de gonflement pour l'expansion.

3. Matériau d'étanchéité selon l'une des revendications 1 ou 2, caractérisé en ce qu'il contient 0 à 0,5 parties en poids d'azodicarbonamide, 0 à 20 parties en poids de carbonate de calcium (non enduit), 1,5 à 2,5 parties en poids de laurate de barium-cadmium, et/ou de stéarate de baryum-cadmium et/ou de myristate de baryum-cadmium,

0,4 à 0,6 partie en poids d'un phosphite organique, avec un indice de réfraction $N_D^{20} = 1,515$ à 1,525. 1 à 2 parties en poids d'huile de soja époxydée, et 0,5 à 1,5 parties en poids de noir de fumée ou de noir de gaz pour un matériau d'étanchéité noir, ou 4 à 8 parties en poids de dioxyde de titane du type rutile pour un matériau d'étanchéité blanc.

4. Matériau d'étanchéité selon l'une quelconque des revendications 1 à 3, caractérisé en ce qu'il contient 50 parties en poids de polyéthylène surchloré (PCE).

5. Utilisation du matériau d'étanchéité selon l'une quelconque des revendications 1 à 4, sous la forme d'une masse à injecter ou sous la forme d'une lèvre d'étanchéité coextrudée, pour réaliser l'étanchéité de corps en matière plastique, en particulier de battants de portes ou de fenêtres, plus spécialement pour le vitrage sans mastic de portes ou de fenêtres.